# EUROPEAN PATENT APPLICATION

(11) **EP 1 617 414 A2**
(43) Date of publication of application: **18.01.2006**
(21) Application number: 05254420.2
(22) Date of filing: 14.07.2005
(51) Int. Cl.: G10L 19/00

(54) **Transmission of a data signal in an audio signal**

(30) Priority: 14.07.2004 GB 0415750
(71) Applicant: BRITISH BROADCASTING CORPORATION, London W1A 1AA (GB)
(72) Inventor: Walker, Robert, c/o BBC Res. & Development Dep., Surrey, KT20 6NP (GB)
(74) Representative: Abnett, Richard Charles

(57) **Abstract**

In a transmission, encoding or recording system for use with audio signals, a selected frequency component of the audio signal is removed and replaced by a substitute component which is synthesized from the rest of the audio signal and is modulated in dependence upon the data to be transmitted. The additional data can then be made imperceptible and the audio signal can still be processed as before, while the additional data can be readily detected.

At the transmitter (12), a predictor (24) synthesizes a selected frequency component from the rest of the audio signal. The synthesized component is modulated by the data in a modulator (26), and combined in a combiner (30) with the original signal from which the selected frequency component has been removed by a band-stop filter (22). At the receiver (14, Fig. 2), a like predictor (46) can generate the same synthesized signal for comparison with the corresponding component of the transmitted signal selected by a band-pass filter (44), the two combined in a subtractor (48) and the difference detected by a correlator (50) to retrieve the added data.

## Description

### Background of the Invention

This invention relates to an apparatus and method for the transmission of a data signal in an audio signal, and to a transmitter and receiver for use in such a system.

There is a need to transmit data signals with audio-frequency signals for a number of purposes, including in particular control or management purposes so as to control routing or access to the audio material, and also tracking purposes so as to enable the source or provenance of the material to be traced, such as for copyright management or forensic purposes. Such addition of data is sometimes referred to as "watermarking".

Similar problems to those arising with transmission of audio material also arise with recordings of audio material. In this specification the term "transmit" and its derivatives is used to encompass also the term "record" and its corresponding derivatives.

Embedding a data signal in an audio signal involves a balance between a number of factors, including:
a) audio quality - the data should be inaudible and the system should not impair the audio quality to any perceptible extent, under a wide range of reception conditions;
b) reliability - any system intended to control access by a legitimate customer to legally acquired material must in particular be reliable, and must also operate quickly;
c) robustness - the system must be resistant to significant degradation of the material, e.g. in a transmission channel or by unlawful copying; and
d) audio coding for bit-rate reduction - when used with a bit-rate reduction system there is an inherent conflict between the bit-rate reduction system, which tries to remove inaudible components, and the data embedding system, which tries to hide the additional data inaudibly.

Several methods for embedding data signals in audio signals are known, see for example Hill, P.C.J. "Simultaneous subliminal signalling in conventional sound circuits", BBC Research Department Report No. RD 1971/1, January 1971, available *inter alia* at: **www.**bbc.co.uk/rd/pubs/reports/1971_01.html.This discusses several additive, multiplicative and hybrid systems. The additive systems described comprise: addition of a single tone; adding signals masked by the actual programme material; superimposing pseudo-random binary noise sequences; and adding noise signals, which may be frequency weighted. The multiplicative systems described involve: modulation of the audio signal by phase switching, phase or frequency modulation with a constant envelope; short duration amplitude reduction or "drop-outs"; frequency notches with one notch or a "comb" of notches; low-level harmonic distortion or quantisation switching; frequency switching or perturbing selected audio components; and artificial reverberation or echoes. Finally the hybrid systems considered used both additive and multiplicative types of signalling simultaneously. One of these was a system which used a notch or comb of notches, with a low-level modulated tone signal modulated into the or each notch.

Other proposals have been made, one example of which was used to carry compression data from an audio compressor to a matching expander, a system known as a pilot tone compander system, see (1) Jones, A.H., A *PCM sound-in-syncs distribution system: general description,* BBC RD Report 1969/35; (2) Manson, W.I. and Shorter, D.E.L., A *PCM sound-in-syncs distribution system: syllabic rate companding,* BBC RD Report 1969/48; and (3) Dalton, C.J. A *PCM sound-in-syncs distribution system for outside broadcasts,* BBC RD Report 1970/28. This system uses a combination of subtracting selected frequency bands from the audio signal, i.e. adding notches, and adding amplitude-modulated pilot tones into the notches. In this case the added signal was removed afterwards, so there was no requirement for inaudibility.

There is now a need for a system that can be used in the current audio environment and which provides an improvement over the previously-proposed systems, in terms of inaudibility, security, robustness to a large range of attacks, and provision of a significantly useful hidden channel data rate, without an undue increase in equipment complexity. Audio naturally has highly variable components which makes the masking of added data difficult to achieve.

### Summary of the Invention

The present invention in its various aspects is defined in the independent claims appended to this description, to which reference should now be made. Advantageous features of the invention are set forth in the appendant claims.

A preferred audio transmission system embodying the invention is described in more detail below, with reference to the drawings. Briefly, in this system, a selected frequency component of the audio signal is removed and replaced by a substitute component which is synthesized from the rest of the audio signal and is modulated in dependence upon the data to be transmitted. The additional data can then be made imperceptible and the audio signal can still be processed as before, while the additional data can be readily detected.

In this embodiment, at a transmitter, a predictor synthesizes a selected frequency component from the rest of the audio signal. The synthesized component is modulated by the data in a modulator, and combined in a combiner with the original signal from which the selected frequency component has been removed by a band-stop filter. At a receiver, a like predictor can generate the same synthesized signal for comparison with the corresponding component of the transmitted signal selected by a band-pass filter, the two combined in a subtractor and the difference detected by a correlator to retrieve the added data.

There may be a plurality of separated frequency components which are replaced by substitute components. The data can be subjected to spectrum spreading at the transmitter and despreading at the receiver. Preferably, at the receiver the substitute frequency component is replaced by the comparison frequency component before being output as a received or decoded audio signal.

As noted above, the system is applicable to a data storage system as well as to a transmission system, the transmitter and receiver being replaced by an encoder and decoder respectively.

### Brief Description of the Drawings

The invention will be described in more detail, by way of example, with reference to the accompanying drawings, in which:
Fig.1 is a block diagram of a transmitter used in a first audio transmission system embodying the invention;
Fig. 2 is a block diagram of a receiver used in the first audio transmission system;
Fig. 3 shows spectrum diagrams illustrating the operation of the transmitter of Fig. 1;
Fig. 4 shows spectrum diagrams illustrating the operation of the receiver of Fig. 2;
Fig. 5 is a block diagram of a transmitter used in a second audio transmission system embodying the invention;
Fig. 6 is a block diagram of a receiver used in the second audio transmission system;
Fig. 7 is a block diagram of a modification of the receiver of Fig. 2;
Fig. 8 is a block diagram of a modification of the receiver of Fig. 6;
Fig. 9 is a block diagram of a simple predictor as used in the circuits of Figs. 1, 2, 5, 6, 7, or 8;
Fig. 10 is a block diagram of a more-complex predictor;
Fig. 11 illustrates a first modulator that can be used in the system; and
**Figs. 12, 12A, 12B, and 12C** illustrate alternative modulators that can be used in the system.

### Detailed Description of the Preferred Embodiments

Preferred audio transmission systems will now be described with reference to the drawings. As noted above, although described in terms of a transmission system, the invention can equally be used with a recording system. With a transmission system, it can be used with broadcast transmission systems or with point-to-point transmission systems, including systems using the Internet. The audio signal referred to will generally be a stand-alone audio signal, but could be the audio part of a composite video or multimedia signal.

### First embodiment

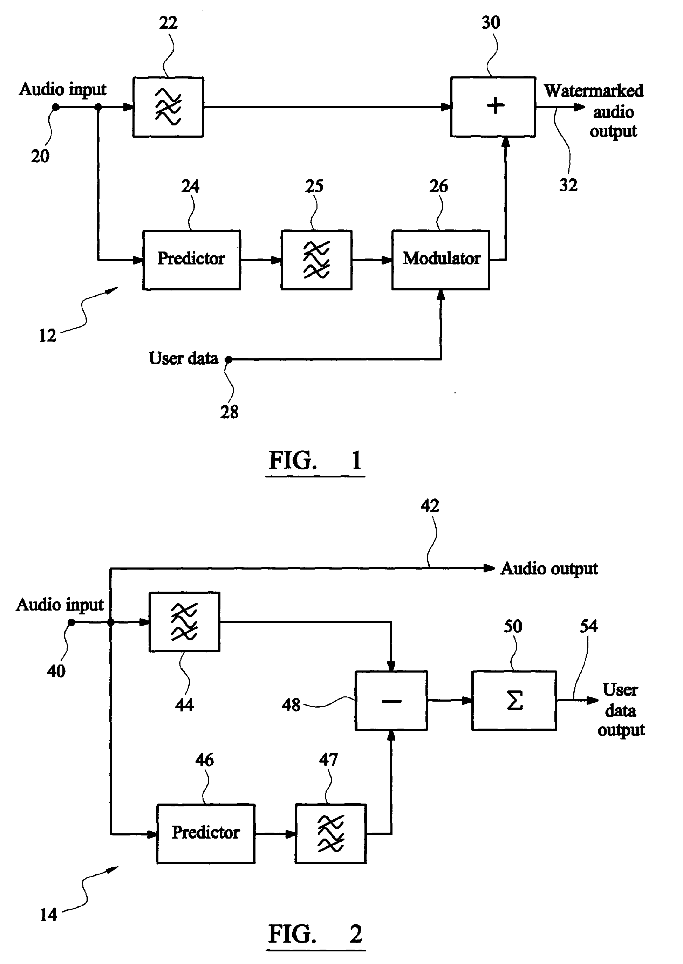

A first audio transmission system embodying the invention will be described with reference to Figs. 1 and 2. Fig. 1 is a block diagram of processor circuitry used in a transmitter and Fig. 2 is a block diagram of processor circuitry used in a receiver, both used in the first transmission system embodying the invention. The transmitter 12 illustrated in Figure 1 has an audio signal input 20 which is connected to the input of a band-stop filter 22 which is constructed to remove one or more frequency bands from the audio signal, and is also connected to the input of a predictor circuit 24, described in detail below. The output of the predictor is applied through a band-pass filter 25 (which, as discussed below, may be part of the predictor circuit 24) to a multiplier or modulator 26, the other input of which receives the data signal to be transmitted (the user data) and which is received at an input 28. Possible and preferred forms the modulator may take are described later. The outputs of the band-stop filter 22 and modulator 26 are combined in a combiner or adder 30, which provides the transmission signal at an output 32, where it may be applied to a transmission circuit, not shown.

The receiver 14 receives the transmitted signal at an input 40 from an appropriate reception circuit, not shown. The receiver in one example of the use of the invention forms a secure digital musical interface. The transmitted signal is in this embodiment applied directly to an output 42 as the output audio signal. The transmitted signal is also applied to a bandpass filter 44 and to a predictor circuit 46. The output of the predictor circuit 46 is applied through a band-pass filter 47 to one input of a subtractor 48, which receives the output of the band-pass filter 44 at its other input. The subtractor 48 subtracts the signals at its two inputs. The output of the subtractor is applied to a correlation detector 50. The output data from the correlation detector 50 is applied over a data output 54.

### Operation

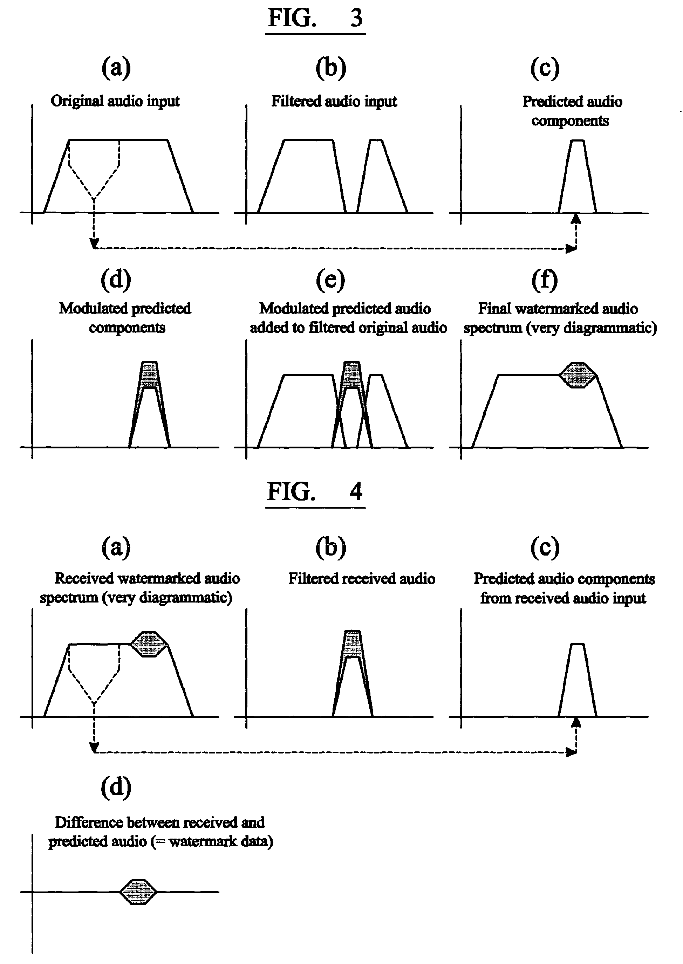

The operation of the system of Figs. 1 and 2 is as follows. Reference is made to Figs. 3 and 4 which illustrate the signals at the transmitter 12 and receiver 14 respectively. At the transmitter 12, the input signal may be assumed to be a signal which extends across the audio range and is diagrammatically illustrated in Fig. 3 at (a). This signal is applied from the input 20 to the band-stop filter 22 in Fig. 1, which removes a small band or frequency component (band of adjacent frequencies) of the signal so as to form a notch in the frequency spectrum of the received audio signal. The width of the notch will typically be from 1 Hz up to 200 Hz or perhaps 300 Hz. The narrower the notch is, the better is the inaudibility, but the lower is the data rate. The notch is shown in exaggerated form in Fig. 3 at (b). The predictor 24 is designed to receive the audio signal at (a) and to estimate or predict from the signal the audio signal component that would be likely to fill the region of the notch, that is what the audio signal might be in the frequency band that is removed by the band-stop filter 22. The thus-synthesized audio components are shown at (c) in Fig. 3. The predictor employs a prediction algorithm to calculate from the received audio signal the properties of the removed band. This is illustrated by the dashed lines linking (a) and (c) in Fig. 3. As thus indicated, the predicted component which is to replace the notch is predicted from the rest of the audio input signal, i.e. the signal components which do not fall within the notch, and as shown is predicted solely from the audio signal components which lie outside (as illustrated below) the notch frequency. The manner in which the prediction is done in this embodiment is described in more detail below. The predicted portion of the signal which would fill the notch region is then extracted by the band-pass filter 25.

It will be appreciated that the arrangement of the circuit elements may be different from that shown. Thus, the predictor could be connected to the output of the band-stop filter 22, and, depending on the construction of the predictor 24, the band-pass filter 25 may be inherent in the structure of the predictor or may simply be unnecessary.

The notch formed in the audio signal by the band-stop filter 22 is now filled in a manner dependent upon the data to be transmitted. However, the incoming data at input 28 is not applied directly to the combining circuit 30, but rather is first multiplied in the modulator 26 with the output of the predictor 24, as illustrated at (d) in Fig. 3. The data from the modulator or multiplier 26 thus mimics the properties of the removed band, so that when it is re-inserted into the audio signal by the combiner 30, as illustrated at (e) in Fig. 3, it produces an output signal as illustrated at (f) in which the presence of the data signal can not be subjectively discerned.

At the receiver 12, the audio signal with the added data in the frequency notches as shown at (a) in Fig. 4 is received at input 40. This may simply be used as the audio signal, as shown, and outputted as the audio output 42, or optionally may be processed in any desired way to reduce the effect of the added data, such as described below. The received signal is also applied to the bandpass filter 44 which has an inverse characteristic to that of the band-stop filter 22 at the transmitter and passes only the part of the frequency spectrum which contains the notch, thus removing the non-data audio bands, as shown at (b) in Fig. 4. The predictor 46 employs a prediction algorithm, normally the same as in the predictor 24 in the transmitter, which estimates the properties of the data-carrying band (the 'notch') and reproduces the carrier signals, as shown at (c) in Fig. 4. More accurately, the predictor 24 in the transmitter models what the predictor 46 in the receiver will do with the same audio signal. This is applied to the band-pass filter 47 to remove residual audio signal components outside the notch frequency. The subtractor 48 then calculates the differences between the re-generated carriers from the predictor 46 and the filtered received signal from the band-pass filter 44, and the correlation detector 50 recovers the received data which is applied to the output 54.

It will be seen that the system operates by removing certain parts of the audio spectrum and replacing them with components that are (a) similar enough to the original to provide an adequately unimpaired audio signal and (b) different enough so that when compared with the predicted components at the receiver they can carry additional data through a transmission or recording system. The data is transmitted as the differential nature of the modulation at the transmitting end and the comparison (or subtraction) at the receiving end. The transmission system may be referred to as a "watermarking" system. The system does not rely on the direct properties of the replaced components.

It will thus be seen that the data is conveyed as a difference from the audio signal rather than as an absolute signal level. If the predictor were to be perfectly consistent, then the data being transmitted could be conveyed by very small modifications of the audio signal. The 'hiding' of the data would reside entirely in the decoding algorithm, and the usual disturbance of the decoding by the underlying audio signal removed entirely. That would make for a significant improvement in the data rate and robustness. In practice, the synthesis process is not perfect and some allowance has to be made for that imperfection. Nevertheless, potentially there are substantial improvements over existing systems.

The data-carrying capacity of the system lies in the detectable difference between the properties of the added signals computed from the remaining audio, and the signals actually added. Existing notch-based systems, such as described in the introduction above, carry the data in the form of the actual value of the signals added into the notches, taking no account of the audio signals they replace. Because audio naturally has highly variable components, any system based on the actual amplitude has to accommodate those large variations and must necessarily have either a much lower data rate (longer averaging time) or higher levels of embedded signals. By using differences instead, greater sensitivity and/or shorter averaging times can be obtained with lower levels of distortion of the original audio signal. This leads to lower perceptibility of the embedded signal.

The signal transmitted can be said to be both subjectively and objectively similar to the original audio signal while still transmitting the user data. It is subjective in the sense that the carrier signal (the audio) must not be impaired to the extent that it becomes useless for its main purpose, that is, the conveying of the original audio signal to an acceptable level of quality. That quality will vary depending of different applications of the final signal. In many cases, the impairment of the original signal will be required to be "imperceptible". That is a subjective test, and the degree of imperceptibility required will depend on the particular use to which the system is being put. The system itself may be required to be imperceptible as a watermark for security reasons; the users of the system may not wish the audience to know that the material is being watermarked. Recently, in the recorded CD market, some publishers have been using watermarking systems to protect their copyright.

The signal must be objectively similar in that the objective parameters of a data transmission system might adversely affect the operation of the transmission equipment if they were too different from a real audio signal. Generally, modern audio bit rate reduction systems would be the most easily affected, but other systems might also be affected if the changes were large. The changes might not necessarily affect the subjective quality, as discussed above. Secondly, any objective alteration of the audio signal assists anyone trying to break into the system, in order to overcome it or to produce fake identifications.

The system operates by deriving the carriers that are to be used to transmit the data in such a manner that they can be re-derived from the modified signal at the receiver. This is achieved, as illustrated, by deriving these carriers from the rest of the audio signal not including the frequency region occupied by the carriers themselves. By deriving the carriers in this way they are similar to or 'fit with' the rest of the audio signal and are thus sufficiently subjectively inaudible and objectively similar to the original audio signal.

Although only one notch has been described and illustrated, the system may be extended to use two or more separated notches.

### Second embodiment

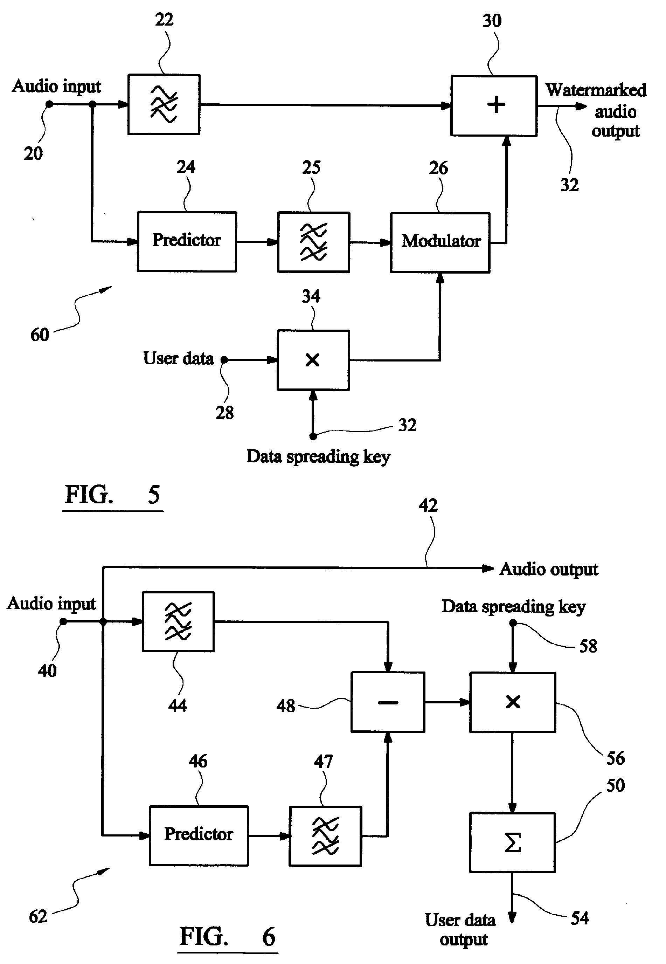

A second embodiment of the invention is illustrated in Figs. 5 and 6, where Fig. 5 is a block diagram of a transmitter 60 and Fig. 6 is a block diagram of a receiver 62. Similar parts to those of Figs. 1 and 2 carry the same reference numerals and are not described in detail again. This embodiment differs from the first embodiment of Figs. 1 and 2 in that the user data is subject to a spread spectrum operation before being applied to the modulator 26. That is to say, the transmitter 60 includes a modulator or spreader 34 between the user data input 28 and the modulator 26. The modulator 34 has a second input 32 which receives a data spreading key. The transmitter operates in exactly the same way as the transmitter 12 of Fig. 1, except that the data is subject to the spread spectrum operation before being modulated onto the carrier provided by the predictor 24.

At the receiver 62 shown in Fig. 6, an additional circuit is provided in the form of a despreader 56, which receives the data spreading key at an input 58. The despreader 56 is connected between the subtractor 48 and the correlation detector 50, and removes the effect of the spreader 34 at the transmitter. Apart from this modification to the data to be transmitted, the operation of the receiver of Fig. 6 is the same as the operation of the receiver 14 of Fig. 2. The data is spread in time and, if more than one notch is used, in frequency. This further improves its inaudibility.

### Modified receivers

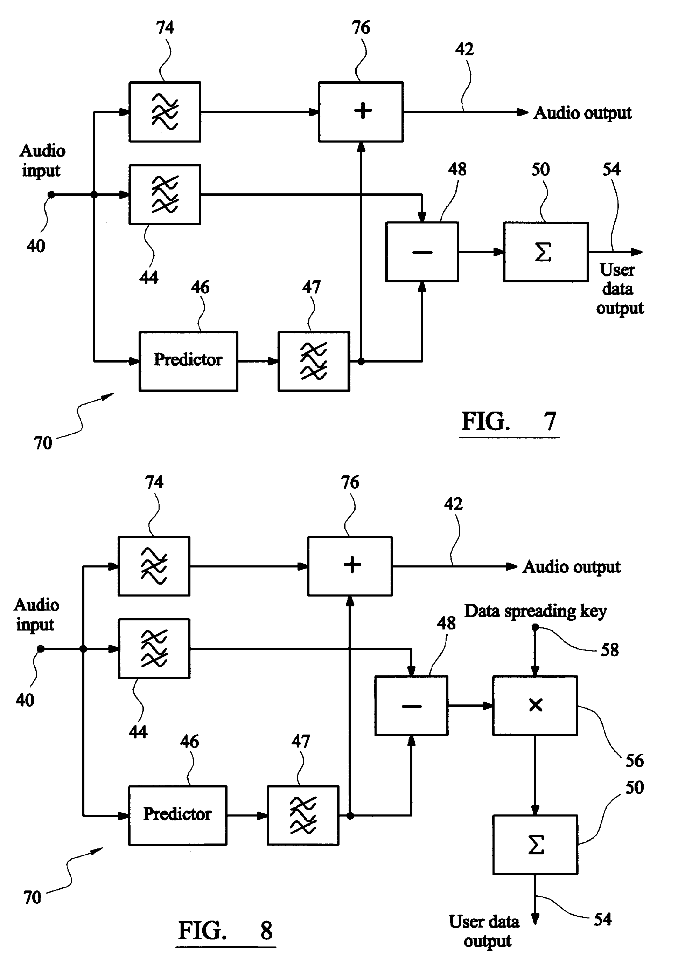

Two modified receivers 70 and 72 are shown in Figs. 7 and 8 respectively, and will now be described. The receiver of Fig. 7 is the same as the receiver of Fig. 2 except for the addition of a band-stop filter 74 and an adder 76, connected in series between the input 40 and the audio output 42. The second input of the adder 76 receives the output of the predictor 46 and band-pass filter 47. The band-stop filter 74 is like the band-stop filter 22 in Fig. 1 and serves to remove the data which has been added to the signal. This regenerates the notch, as at (b) in Fig. 3, and this is then filled by the output from the predictor 46 in the receiver, namely the waveform at (c) in Fig. 4. In this way the notch contains predicted audio without any influence from the transmitted data, making the transmitted data even more imperceptible than in the unmodified embodiments described above.

Fig. 8 shows the same modification when made to the spread spectrum system of Fig. 6. This is self-explanatory in view of the foregoing description.

In the systems described above, the two ends of the transmission system have been referred to as a transmitter and a receiver. They may equally be regarded as an encoder and a decoder. The nature of the transmission path is immaterial; it may be a broadcast or point-to-point transmission and in particular it may be via the Internet.

### Recorder embodiment

When the system is used in the recording rather than the transmission of audio signals, instead of the transmitter being provided with a transmission circuit and the receiver being provided with a reception circuit, there is a recorder provided with a recording circuit and a reader provided with a reading circuit. Those skilled in the art will be aware of the equipment including a storage device such as a hard disc drive which is required for this purpose.

### Predictor structure

The structure of the preferred predictors 24 and 46 and will now be described in more detail. The predictors 24, 46 have the effect that the carriers added in the notches formed by the band-stop filter 22 have properties similar to the audio that had originally been there and which was stopped by the filter 22. The preferred predictors use spectral band replication (SBR) techniques, though other types of predictor may be used instead. Spectral band replication is a technique used in a form of the MPEG-4 standard known as MPEG-4 AAC-plus-SBR. It is also used in Digital Radio Mondiale (DRM) and in MP3 Pro, and is thus known to those skilled in the art. Accordingly a full description is not necessary here. For further description reference may be made to International Patent Application Publication Nos. WO98/57436 and WO00/45379 as well as a paper by Liu, C-M et al., High Frequency Reconstruction for Band-Limited Audio Signals, Proc. 6th. Int. Conf. Digital Audio Effects (DAFX-03), London, U.K., September 8-11, 2003, and to the references contained in those documents.

Spectral band replication involves estimating non-transmitted higher frequency components of a compressed audio signal from the transmitted baseband, possibly with some helper bits transmitted with the audio. SBR allows restoration of the upper frequency range. That is, the higher frequencies are reconstructed by the SBR decoder based on an analysis of the lower frequencies transmitted by the base coder. As used here, the missing portion of the signal may conveniently be near the top of the frequency range but may in principle be any part of the frequency range and will generally be an upper intermediate portion rather than the top portion. The principles employed are however the same.

Such a system, in which the added data carriers have similar characteristics to the audio originally present, makes the data less perceptible and is very robust, especially when applied to digital coding, where the data signal would be more likely to be seen as part of the audio signal.

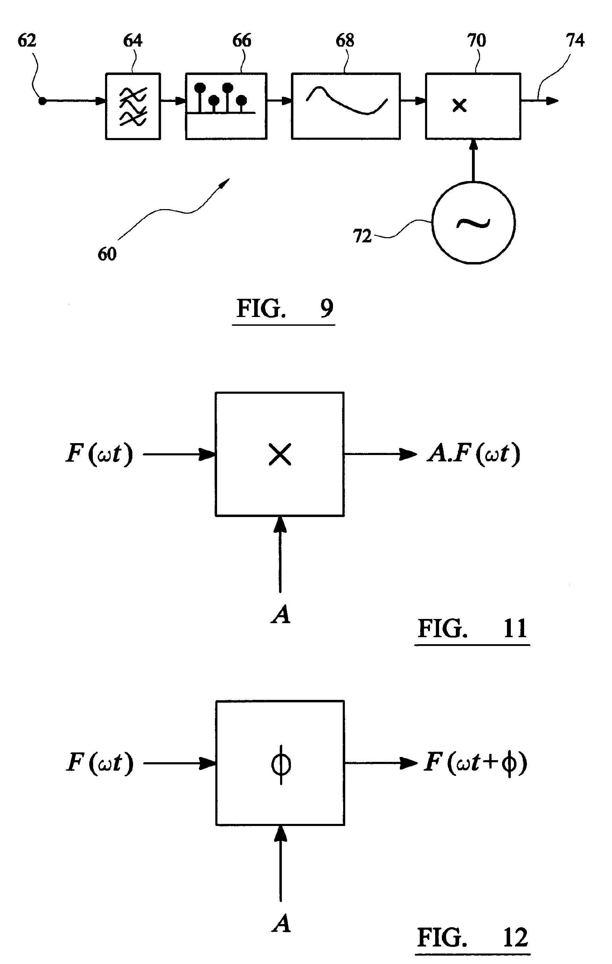

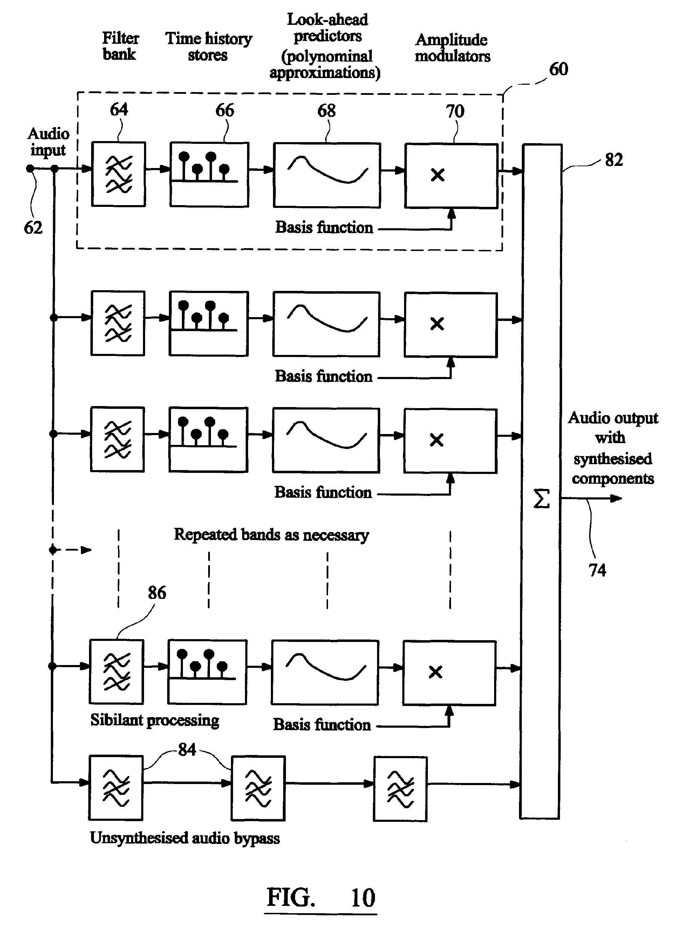

A simple predictor is illustrated in Fig. 9 and a preferred, more complex, predictor in Fig. 10. Referring first to Fig. 9, the predictor 60 is designed for prediction of a narrow band of audio frequencies. Such a predictor is known for other purposes. The predictor 60 comprises an audio signal input 62 to which is connected a bandpass filter 64 to select the band which is to be 'predicted'. The output of the filter 64 is connected to a storage device 66 which samples and stores the history of a selected characteristic or property of the filtered audio input signal, such as its amplitude. This is used by a polynomial approximation circuit 68 which is coupled to the storage device 66 to calculate a predicted value for the signal characteristic or property in accordance with a stored polynomial function which combines previous values in a relationship determined by the polynomial. Such circuits are known. The resultant values are then applied to a modulator 70, in this example an amplitude modulator, which receives a basis function from a sinusoidal oscillator 72. The output 74 of the modulator constitutes the output of the predictor 60 and comprises the predicted audio frequency component.

The filter 64 may be implemented as a Fourier Transform device, or as a real physical filter using passive inductors, capacitors and resistors, or as a switched-capacitor network, or as any one of a large number of active filter arrangements using active amplifiers, or a digital signal-processing computer or microprocessor, or as any other of a very large number of well-known filter circuits. In narrow-band prediction or synthesis as shown in Fig. 9, the filter bank covers a restricted portion of the audio spectrum, and the purpose of the predictor is to synthesise or reconstruct a single component part of the audio spectrum.

Fig. 10 shows a predictor where the predictor 80 is designed for full-band replication, i.e. where the whole audio signal is output as a reconstructed entity. Thus the figure shows an example of full-band replication as has been used for other purposes; it is not expected that it would be necessary to go this far in implementing the present invention, but it illustrates the extension beyond the simple predictor of Fig. 9. As will be seen, the predictor 80 is constructed of a plurality of component predictors 60 as shown in Fig. 9, the outputs of which are combined in a combiner 82. Also shown is an unsynthesised audio bypass path comprising band-stop filters 84, of which three only are shown, though the actual number will correspond to the number of filters 64. Also a special sibilant processing path 86 is included. The predictor 80 of Fig. 10 is of a type preferably implemented in SBR.

The filter bank may be, and usually is, implemented as a Fourier Transform. The oscillators (basis functions), except for the sibilants, are the Fourier basis functions (eigentones) shifted in frequency. In SBR, the filter bank covers the whole of the upper part of the audio spectrum, without breaks or gaps. The purpose is to synthesise or reconstruct a substantial part of the upper audio spectrum to avoid the need to transmit it.

In a transmission system embodying the invention, the predictor is selective, i.e. the whole audio signal is was not necessarily required as a reconstructed entity. In particular, the unsynthesised audio bypass components are not required. The filter bank can be selective, depending on the required data rate and robustness. In some applications only one or a very few narrow bands might be synthesised. That results in a system with a low audibility and/or very robust but low data rate. In another application, several or many relatively wider bands may be synthesised. That results in a system with a higher audibility and/or high data rate. The purpose here is to synthesise or reconstruct small parts of the upper audio spectrum in order to conceal the embedded data at the same time as producing little or no subjective impairment.

### Modulator

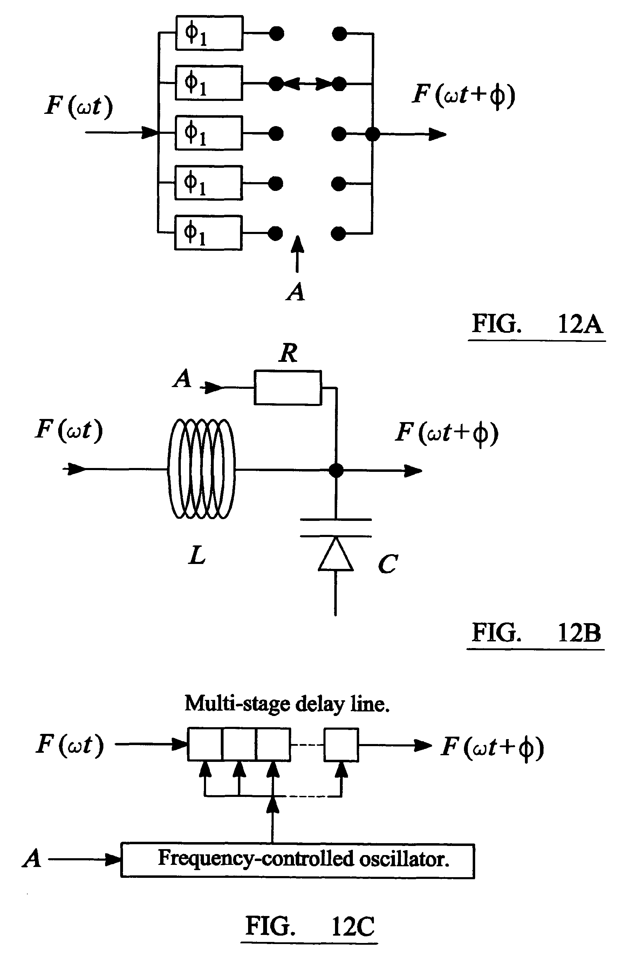

The modulator 26 may take various forms and examples will now be described with reference to Fig. 11, and Figs. 12, 12A, 12B and 12C. Fig.11 shows a straight-forward amplitude modulator in which the carrier signal *F(ωt)* is modified in amplitude by the data signal A. This can be accomplished by any one of a very large number of well-established techniques, including using a suitable, commonly available semiconductor chip designed for the purpose.

Fig. 12 illustrates a phase modulator in which the carrier signal *F*(*ωt)* is modified in phase by the data signal A to provide an output signal *F(ωt* + *ϕ).* This can be accomplished by any one of a large number of well-established techniques, such as used in telecommunication modems. The mechanisms are illustrated in Figs. 12A to 12C respectively and may include:
(A) having available a number of different phases of *F(ωt)* and selecting between them according to the data signal A,
(B) having a variable phase shift circuit comprising a plurality of reactive components, one or more of which can be varied, such as the resistor R, inductor L and varactor diode C acting as a capacitor as shown, arranged such that varying the components introduces changes in the phase of the signal, and
(C) having available a variable time delay, e.g. a multi-stage delay line, such that changing the delay in response to the data signal A alters the effective phase of the signal.
In view of the well-known nature of each of these modulators detailed description is not necessary here.

It will be appreciated by those skilled in the art that many modifications may be made to the systems described and illustrated within the scope of the appended claims.

## Claims

1. A method of transmitting or encoding data in an audio signal, the method comprising the steps of:
at a transmitter or encoder:
receiving an audio signal;
receiving data to be transmitted or encoded;
replacing a component of the received audio signal having a predetermined frequency by a substitute component at the same frequency, the substitute component being synthesized from the rest of the audio signal, and the substitute frequency component being modified in dependence upon the received data to be transmitted or encoded; and
transmitting or outputting the resultant signal containing the substitute frequency component; and
at a receiver or decoder:
receiving the transmitted or outputted signal with the substitute frequency component;
synthesizing a comparison frequency component at the predetermined frequency from the result of the signal;
comparing the substitute frequency component of the transmitted or encoded signal with the comparison frequency component to detect modification to the substitute frequency component which is dependent upon the data being transmitted or outputted, and
generating therefrom an output signal representative of the data.

2. A method according to claim 1, in which there are a plurality of separated frequency components which are replaced by substitute components.

3. A method according to claim 1 or 2, further comprising the step of spectrum spreading the received data before it is used to modify the substitute frequency component at the transmitter or encoder, and despreading the data in the output signal at the receiver or decoder.

4. A method according to claim 1, 2 or 3, in which at the receiver or decoder the substitute frequency component is replaced by the comparison frequency component before being output as a received or decoded audio signal.

5. A method according to any of claims 1 to 4, in which the substitute frequency component is modified by modulation by the data.

6. A method according to any of claims 1 to 5, in which at the transmitter or encoder the replacing step comprises:
removing a component of the received audio signal having a predetermined frequency;
synthesizing a substitute component at the same frequency from the rest of the audio signal; and
modifying the substitute component in dependence upon the received data to be transmitted or encoded; and
reinserting the modified substitute component into the signal in the place of the removed component.

7. A method according to any of claims 1 to 5, in which the substitute component is synthesized by spectral band replication techniques.

8. A transmitter or encoder for use in the method of claim 1 comprising:
an audio input for receiving an audio signal;
a data input for receiving data to be transmitted or encoded;
processor circuitry coupled to the audio input and the data input for replacing a component of the received audio signal having a predetermined frequency by a substitute component at the same frequency, the substitute component being synthesized from the rest of the audio signal, and the substitute frequency component being modified in dependence upon the received data to be transmitted or encoded; and
a transmission or output circuit for transmitting or outputting the resultant signal containing the substitute frequency component.

9. Apparatus according to claim 8, in which the processor circuitry replaces a plurality of separated frequency components by substitute components.

10. Apparatus according to claim 8 or 9, further comprising a spread spectrum spreader coupled between the data input and the processor circuitry.

11. Apparatus according to claims 8, 9 or 10, in which the processor circuitry comprises a modulator to modify the substitute frequency component by the data.

12. Apparatus according to any of claims 8 to 11, in which the processor circuitry comprises:
a band-stop filter coupled to the audio input for removing a component of the received audio signal having a predetermined frequency;
a predictor coupled to the audio input for synthesizing a substitute component at the same frequency from the rest of the audio signal;
a modulator coupled to the data input and to the output of the predictor for modifying the substitute component in dependence upon the received data to be transmitted or encoded; and
a combiner coupled to the outputs of the band-stop filter and the modulator for reinserting the modified substitute component into the signal in the place of the removed component.

13. Apparatus according to any of claims 8 to 12, in which the processor circuitry comprises a spectral band replicator to synthesize the substitute component.

14. A receiver or decoder for use in the method of claim 1, comprising:
a reception circuit for receiving a transmitted or outputted signal containing a substitute frequency component at a predetermined frequency;
processor circuitry coupled to the reception circuit for synthesizing a comparison frequency component at the predetermined frequency from the rest of the signal, for comprising the substitute frequency component of the transmitted or outputted signal with the comparison frequency component to detect modification to the substitute frequency component which is dependent upon data being transmitted or outputted, and for generating therefrom an output signal representative of the data.

15. Apparatus according to claim 14, in which the processor circuitry synthesizes a plurality of separated comparison frequency components.

16. Apparatus according to claim 14 or 15, further comprising a spread spectrum despreader coupled to receive the output signal.

17. Apparatus according to claim 14, 15 or 16, in which the processor circuitry replaces the substitute frequency component by the comparison frequency component and outputs the resultant as a received or decoded audio signal.

18. Apparatus according to any of claims 14 to 17, in which the processor circuitry comprises a correlator circuit to extract the modifications in the substitute frequency component.

19. Apparatus according to any of claims 14 to 18, in which the processing circuitry comprises:
a band-pass filter coupled to the reception circuit for passing only a component of the received signal having a predetermined frequency;
a predictor coupled to the reception circuit for synthesizing a comparison component at the predetermined frequency from the rest of the received signal;
combining means coupled to the outputs of the band-pass filter and the predictor for comparing the substitute frequency component of the received signal with the comparison frequency component; and
a circuit coupled to the output of the combining means to extract the received data.

20. A method of recording and replaying an audio signal together with additional data, the method comprising the steps of:
in a recording operation:
receiving data to be recorded with the audio signal;
replacing a component of the received audio signal having a predetermined frequency by a substitute component at the same frequency, the substitute component being synthesized from the rest of the audio signal, and the substitute frequency component being modified in dependence upon the received data to be recorded; and
recording the resultant signal containing the substitute frequency component; and
in a replay operation:
retrieving the recorded signal with the substitute frequency component;
synthesizing a comparison frequency component at the predetermined frequency from the result of the signal;
comparing the substitute frequency component of the recorded signal with the comparison frequency component to detect modification to the substitute frequency component which is dependent upon the data; and
generating therefrom an output signal representative of the data.

21. A recorder for use in the method of claim 20 comprising:
an audio input for receiving an audio signal;
a data input for receiving data to be recorded with the audio signal;
processor circuitry coupled to the audio input and the data input for replacing a component of the received audio signal having a predetermined frequency by a substitute component at the same frequency, the substitute component being synthesized from the rest of the audio signal, and the substitute frequency component being modified in dependence upon the received data to be recorded; and
a recording circuit for recording the resultant signal containing the substitute frequency component.

22. Replay apparatus for use in the method of claim 20, comprising:
a reception circuit for retrieving a recorded signal containing a substitute frequency component at a predetermined frequency;
processor circuitry coupled to the reception circuit for synthesizing a comparison frequency component at the predetermined frequency from the rest of the signal, for comprising the substitute frequency component of the recorded signal with the comparison frequency component to detect modification to the substitute frequency component which is dependent upon data, and for generating therefrom an output signal representative of the data.
